# EUROPÄISCHE PATENTSCHRIFT

(11) **EP 4 523 882 B1**
(45) Veröffentlichungstag und Bekanntmachung des Hinweises auf die Patenterteilung: **15.10.2025**
(21) Anmeldenummer: 24196945.0
(22) Anmeldetag: 28.08.2024
(51) Int. Cl.: B29C 45/02, B29C 45/27, B29C 45/78, B29K 21/00

(54) **SPRITZGIESSVORRICHTUNG MIT VORWÄRMAGGREGAT UND SPRITZGIESSVERFAHREN ZUR HERSTELLUNG EINES ELASTOMERBAUTEILS SOWIE VORWÄRMAGGREGAT**
INJECTION MOLDING APPARATUS WITH PREHEATING UNIT AND INJECTION MOLDING METHOD FOR PRODUCING AN ELASTOMER COMPONENT AND PREHEATING UNIT
DISPOSITIF DE MOULAGE PAR INJECTION AVEC UNE UNITÉ DE PRÉCHAUFFAGE ET UN PROCÉDÉ DE MOULAGE PAR INJECTION POUR PRODUIRE UN COMPOSANT ÉLASTOMÈRE ET UNE UNITÉ DE PRÉCHAUFFAGE

(30) Priorität: 12.09.2023 DE 102023124565
(43) Veröffentlichungstag der Anmeldung: 19.03.2025
(73) Patentinhaber: Vibracoustic SE, 69469 Weinheim (DE)
(72) Erfinder: Wittmershaus, Volker, Birkenau (DE); Kinscherf, Matthias, Birkenau (DE)
(74) Vertreter: Patentanwälte Olbricht Buchhold Keulertz

(56) Entgegenhaltungen:
- EP-A1- 1 410 891
- EP-B1- 1 444 083
- DE-A1- 4 331 209
- US-A1- 2006 061 015

## Beschreibung

Die Erfindung betrifft eine Spritzgießvorrichtung zur Herstellung eines Elastomerbauteils gemäß dem Oberbegriff von Anspruch 1.

Im Folgenden werden die Begriffe "erwärmen", "erhitzen" und "aufheizen" synonym verwendet, sofern sich aus dem jeweiligen Kontext nichts Gegenteiliges ergibt. Ebenso werden die Begriffe "Vernetzung" und "Vulkanisation" synonym verwendet, sofern sich aus dem jeweiligen Kontext nichts Gegenteiliges ergibt. Darüber hinaus werden auch die Begriffe "Einheit", "Aggregat" und "Werkzeug" synonym verwendet, sofern sich aus dem jeweiligen Kontext nichts Gegenteiliges ergibt. Schließlich werden auch die Begriffe "Elastomer" und "Gummi" synonym verwendet, sofern sich aus dem jeweiligen Kontext nichts Gegenteiliges ergibt.

Elastomere Bauteile werden üblicherweise in Spritzgießverfahren mit Spritzgießvorrichtungen hergestellt. Dabei wird im Standardverfahren das Elastomer plastifiziert und beispielsweise in eine Kolbenspritzgussmaschine gefördert. Die Temperatur des Kolbens liegt dabei deutlich unterhalb der Vernetzungstemperatur, welche im Vulkanisationswerkzeug vorherrscht. Folglich muss dem Elastomer weitere Wärmeenergie zugeführt werden, bevor es zu einer Vernetzungsreaktion kommen kann. Dieses geschieht in der Regel zum einen durch Friktionswärme in der Düse des Kolbenaggregates, durch weitere Friktion im Angusskanal oder schließlich im Werkzeug durch den Wärmeübergang aus dem beheizten Werkzeug in das Elastomer in der Spritzgussform.

Solche Maschinen sind im Stand der Technik bekannt, beispielsweise aus der EP1771290B1 oder der DE1917975A1. Um die Zykluszeit zu beschleunigen, wird dort die Temperatur zu erhöht, mit der das Elastomer das Werkzeug erreicht. Das kann zum Beispiel mit Hilfe von erhöhter Friktion erfolgen, etwa durch geringere Einspritzquerschnitte. Das hat aber den Nachteil, dass das Elastomer durch die zusätzliche Friktion geschädigt werden kann, sodass diese Maßnahme nur begrenzt einsetzbar ist. Alternativ ist aus dem Stand der Technik bekannt, spezielle Kolbenaggregate zu verwenden, in welchen das Elastomer schneller vorgewärmt werden kann. Hierfür sind große Oberflächen für einen schnelleren Wärmeübergang im Kolbenaggregat notwendig. Die DE10154676B4 schlägt beispielsweise vor, statt eines zylindrischen Kolbens einen Ringspaltkolben zu verwenden, um die Kontaktfläche von Aggregat und Elastomer zu vergrößern. Allerdings ist hierfür die Anschaffung spezieller Maschinen notwendig, da eine Nachrüstung einer Standardmaschine mit solch einem Ringkolbenaggregat sehr aufwendig ist. Außerdem bekannt sind die EP 1 444 083 B1, die US 2006 / 0 061 015 A1 und die DE 43 31 209 A1.

Die bekannten Spritzgießvorrichtungen, bei denen das Elastomer mit einer höheren Temperatur die Kavität im Vulkanisationswerkzeug erreicht, neigen daher zum einen dazu, das Elastomer beim Einspritzen in das Vulkanisationswerkzeug durch hohe Friktion vorzuschädigen, was zu einer geringeren Lebensdauer der vulkanisierten Bauteile führen kann. Andere Lösungen erfordern die Anschaffung spezieller Maschinen, was einem standardisierten Maschinenpark widerspricht und zu wirtschaftlichen Nachteilen führen kann.

Aufgabe der Erfindung ist es daher, eine Spritzgießvorrichtung zur Herstellung von elastomeren Bauteilen sowie ein Vorwärmaggregat und ein Verfahren bereitzustellen, mit denen sich die Nachteile im Stand der Technik beseitigen lassen und mit denen sich insbesondere die Vernetzungszeit beim Spritzgießen verkürzen lässt.

### Allgemeine Beschreibung der Erfindung

Zur Lösung der Aufgabe ist erfindungsgemäß eine Spritzgießvorrichtung gemäß Anspruch 1 vorgesehen. Besondere Ausgestaltungen der Spritzgießvorrichtung sind Gegenstand der Ansprüche 2 bis 14.

Die erfindungsgemäße Spritzgießvorrichtung zur Herstellung eines Elastomerbauteils wird auch als Vulkanisationspresse bezeichnet und umfasst ein Einspritzaggregat zum Spritzen einer elastomeren Formmasse sowie ein Vernetzungswerkzeug zum Vernetzen der Formmasse, wobei das Einspritzaggregat dazu ausgestaltet ist, die Formmasse auf eine Massetemperatur zu erwärmen, und wobei das Vernetzungswerkzeug dazu ausgestaltet ist, die Formmasse auf eine Vernetzungstemperatur zu erwärmen, dadurch gekennzeichnet, dass die Spritzgießvorrichtung ein Vorwärmaggregat umfasst, das dazu ausgestaltet ist, die Formmasse auf eine Vorwärmtemperatur zu erwärmen, wobei die Vorwärmtemperatur im Vorwärmaggregat oberhalb der Massetemperatur im Einspritzaggregat und unterhalb der Vernetzungstemperatur im Vernetzungswerkzeug liegt.

Mit einer derartigen Spritzgießvorrichtung lässt sich die Eintrittstemperatur des Elastomers in die Kavität (also in die Spritzgussform des Vernetzungswerkzeugs) erhöhen und somit die Vulkanisations- oder Vernetzungszeit des herzustellenden Elastomerbauteils herabsetzen, also die Zeit, welche die Formmasse zur vollständigen Vernetzung benötigt. Die Vernetzungszeit bei Elastomerbauteilen hängt neben dem Volumen bzw. der Dicke des Bauteils maßgeblich von der Temperatur ab, mit der die Formmasse in das Vernetzungswerkzeug gespritzt wird.

Üblicherweise wird die Formmasse beim Elastomerspritzgießen zunächst mittels eines Extruders plastifiziert und in ein Spritzaggregat, beispielsweise ein Kolbenspritzaggregat, überführt. Im Extruder und im Spritzaggregat wird die Formmasse mittels Friktion und Kontaktwärme auf die Massetemperatur vorgewärmt. Das Spritzaggregat spritzt anschließend die vorgewärmte Formmasse durch eine Düse in das Vernetzungswerkzeug, wobei die Temperatur der Formmase aufgrund weiterer Friktion in der Düse auf eine Austrittstemperatur zusätzlich erwärmt wird. In einigen Fällen ist der Düse noch ein sogenannter Kaltkanal nachgeschaltet, welcher eine Verteilung der Formmasse auf die Kavitäten gewährleistet, ohne dass die Temperatur der Formmasse signifikant weiter erhöht wird. Gemäß den im Stand der Technik bekannten Lösungen wird die auf Massetemperatur erwärmte Formmasse anschließend zur Vulkanisierung in das Vernetzungswerkzeug gespritzt. Mit dem Vorwärmaggregat wird die im nächsten Vulkanisierungsschritt zu verspritzende Formmasse zunächst auf eine Vorwärmtemperatur erwärmt.

Das Vorwärmen der Formmasse im Vorwärmaggregat hat den Vorteil, dass die Vernetzungstemperatur der Formmasse im Vernetzungswerkzeug besonders schnell erreicht wird, sodass die Zykluszeit stark verringert werden kann. Unter der Zykluszeit ist dabei die Zeit zu verstehen, die für je einen Herstellungszyklus benötigt, wobei der Herstellungszyklus die folgenden Schritte umfasst: Einspritzen der Formmasse in die Kavität, anschließendes Vernetzen de4r Formmasse, Öffnen des Werkzeugs, Entnahme des Bauteils sowie die erneute Beschickung der Form. Die Zykluszeit entspricht also der Zeit, die zur Herstellung je eines Bauteils bzw. zur Herstellung je eines Satzes gleichzeitig hergestellter Bauteile benötigt wird. Parallel zu dem beschriebenen Zyklus erfolgen außerdem die folgenden Schritte: Plastifizieren im Extruder, Befüllen des Einspritzaggregates und Vortemperieren auf Massetemperatur Einspritzaggregat.

Die Formmasse wird beim Einspritzen in die Vernetzungseinheit bereits auf Vorwärmtemperatur erhitzt, weshalb es nur noch einer geringfügigen zusätzlichen Erwärmung auf die Vernetzungstemperatur bedarf, um den Vulkanisationsprozess zu initiieren. Hierdurch kann trotz der verhältnismäßig schlechten Wärmeleiteigenschaften der zu vernetzenden Formmasse eine homogene Temperaturverteilung über den gesamte Bauteilrohling erreicht werden. Dabei ist insbesondere vorgesehen, eine höchstmögliche Vorwärmtemperatur zu wählen, also eine Vorwärmtemperatur, die so nahe wie möglich an der Vernetzungstemperatur der Formmasse liegt, ohne jedoch für ein unerwünschtes Vernetzen der Formmasse bereits im Vorwärmaggregat zu sorgen. Mit anderen Worten: Die Vernetzung soll noch nicht vor dem Einspritzen der Formmasse in das Vernetzungswerkzeug starten.

Vorteilhafterweise ist denkbar, dass die Vorwärmtemperatur ausgewählt ist aus einem Temperaturbereich, in dem die Formmasse im Vorwärmaggregat einerseits ein Minimum ihrer Scherviskosität frühestens nach 5 Minuten Vorwärmzeit erreicht, und andererseits die Scherviskosität der Formmasse spätestens nach 20 Minuten um 20 % gegenüber ihrem Minimum angestiegen ist. Die bevorzugte Höchsttemperatur sollte beim Vorwärmen so gewählt sein, dass das Minimum der Scherviskosität der Formmasse im Vorwärmaggregat frühestens nach 5 Minuten Vorwärmzeit erreicht wird, sodass die Formmasse im Vorwärmaggregat also gerade noch nicht signifikant vernetzt und damit einspritzbar bleibt. Die bevorzugte Mindesttemperatur sollte beim Vorwärmen hingegen so gewählt sein, dass die Scherviskosität der Formmasse im Vorwärmaggregat spätestens nach 20 Minuten Vorwärmzeit um 20 % gegenüber dem Minimum angestiegen ist, d. h. die Vernetzung nach spätestens 20 Minuten gerade eingesetzt ist. Hierdurch lässt sich die Vernetzungszeit im Vernetzungswerkzeug aufgrund der Vorwärmung der Formmasse signifikant reduzieren. Dabei ist die Scherviskosität der Formmasse insbesondere eine Mooney-Viskosität. Als Mooney-Viskosität wird die Scherviskosität bzw. die Fließeigenschaften einer elastomeren Masse bezeichnet, die über das gleichnamige Verfahren (Mooney-Verfahren) bestimmt worden ist. Bei diesem Verfahren wird die elastomere Masse für eine bestimmte Zeit vorgewärmt und anschließend mit konstanter Schergeschwindigkeit belastet (sog. Deformationsphase). Die Mooney-Viskosität bezeichnet die Scherviskosität der Masse ab dem Ende der Deformationsphase.

Üblicherweise wird die Formmasse aus dem Kolbenaggregat ohne zusätzliches Vorwärmen direkt in das Vernetzungswerkzeug gespritzt. Um die Formmasse weiter vorzuwärmen, kann man sich der Friktionswärme in der Düse des Kolbenaggregates und einem gegebenenfalls nachgelagerten Angussverteiler bedienen. Allerdings führt jede starke Friktion der Formmasse zu einer Vorschädigung des Elastomers. Mithilfe des Vorwärmaggregats kann das Elastomer besonders schonend in das Vorwärmaggregat überführt werden, da das Elastomer während der Vernetzung des Bauteils für die Dauer eines Zyklus' im Vorwärmaggregat verharrt und dort mittels Wärmeübergang zusätzliche Wärme vom Vorwärmaggregat aufnehmen kann. Hierdurch entfällt die Notwendigkeit, in der Düse signifikante Friktion in das Elastomer zu induzieren, um dieses weiter vorzuwärmen, sodass sich das Risiko einer Vorschädigung des Elastomers aufgrund von Friktionen minimieren und gleichzeitig die Zykluszeit reduzieren lässt.

Es ist erfindungsgemäß vorgesehen, dass das Vorwärmaggregat mindestens einen Vorwärmblock und mindestens ein Vorwärmstammwerkzeug umfasst, wobei der mindestens eine Vorwärmblock in das mindestens eine Vorwärmstammwerkzeug einsetzbar ist. Vorwärmstammwerkzeug und Vorwärmblöcke sind folglich separate Bauteilkomponenten des Vorwärmaggregates. Durch diesen modularen Aufbau lässt sich das Vorwärmstammwerkzeug mit verschiedenen Vorwärmblöcken kombinieren. Hierdurch kann der Vorwärmblock in seiner Geometrie individuell auf die korrespondierende Kavität oder die Kavitäten des Vernetzungsaggregats abgestimmt werden, ohne dass das Vorwärmstammwerkzeug ebenfalls individuell angepasst werden muss. Auf diese Weise können Werkzeugkosten eingespart und die Herstellzeit reduziert werden.

Es kann außerdem vorgesehen sein, dass die Spritzgießvorrichtung mindestens eine Isolationsplatte umfasst. Mit Hilfe der Isolationsplatte wird eine optimale Wärmeisolation aller am Gießvorgang beteiligten Einheiten gegeneinander und/oder gegen die Umgebung gewährleistet, was zu einer Steigerung der Effizienz der Vorrichtung und somit zu einer Energieeinsparung führt. Gemäß einer Weiterentwicklung ist vorgesehen, dass die Spritzgießvorrichtung mindestens zwei Isolationsplatten umfasst, wobei eine erste Isolationsplatte zwischen dem Einspritzaggregat und dem Vorwärmaggregat oder zwischen dem Verteiler und dem Vorwärmaggregat angeordnet ist und wobei eine zweite Isolationsplatte zwischen dem Vorwärmaggregat und dem Vernetzungswerkzeug angeordnet ist.

Gemäß einer vorteilhaften Ausgestaltung ist vorgesehen, dass die Spritzgießvorrichtung mindestens einen Verteiler umfasst. Der mindestens eine Verteiler kann Teil des Vorwärmaggregats oder als vom Vorwärmaggregat separates Bauelement ausgestaltet sein. Der mindestens eine Verteiler kann außerdem durch eine Isolationsplatte vom Vorwärmaggregat bzw. vom Vorwärmblock des Vorwärmaggregats zumindest bereichsweise thermisch getrennt sein. Ist der Verteiler mittels einer Isolationsplatte vom Vorwärmblock getrennt, kann eine Verteilung der Formmasse außerhalb des Vorwärmaggregates vorgenommen werden, wobei der Verteiler eine geringere Temperatur aufweist als der Vorwärmblock des Vorwärmaggregates. Durch die Isolationsplatte zwischen Verteiler und Vorwärmblock wird der Wärmeübergang von dem höher temperierten Vorwärmblock auf den niedrigen temperierten Verteiler minimiert. Damit kann die Masse an Werkzeugstahl, welche auf Vorwärmtemperatur aufgeheizt werden muss, um das Gewicht des Verteilers reduziert werden, was den Gesamtenergiebedarf für das Temperieren reduziert. Ist der Verteiler hingegen Teil des Vorwärmaggregates, so kann das die Anzahl der Werkzeugkomponenten reduzieren. Außerdem wird hierdurch die Formmasse schon im Verteiler auf Vorwärmtemperatur aufgeheizt, sodass das Volumen des Verteilers zum Gesamtvorwärmvolumen hinzugerechnet werden kann. Das Gesamtvorwärmvolumen ist in diesem Fall die Summe aus dem Volumen des mindestens einen Verteilers und des mindestens einen Vorwärmblocks (sowie eventueller Unterverteiler). Da der Verteiler zusätzliches Volumen zum Vorwärmen bereitstellt, können die Vorwärmblocke selbst kleiner ausfallen oder bei gleichbleibenden Blockgrößen können im Vernetzungswerkzeug größere Bauteile (mit größerem Gummivolumen) hergestellt werden. Die Volumina im Vorwärmblock können als kleiner und damit kostengünstiger gestaltet werden oder es können Bauteile mit insgesamt größerem Elastomervolumen gefertigt werden. Der mindestens eine Verteiler kann als Kaltkanalverteiler ausgeführt sein, d. h. dass der Verteiler Teil des Einspritzaggregats ist.

Gemäß einer vorteilhaften Ausgestaltung ist vorgesehen, dass die Spritzgießvorrichtung mindestens eine Nadelverschlussdüse umfasst. Die Nadelverschlussdüse kann dabei zwischen dem Einspritzaggregat und dem Vorwärmaggregat oder zwischen dem Vorwärmaggregat und dem Vernetzungswerkzeug angeordnet sein. Mit anderen Worten: Die Nadelverschlussdüse kann vor dem Vorwärmaggregat oder hinter der Vorwärmaggregat angeordnet sein, wobei sich "vor" bzw. "hinter" auf den Verlauf der Formmasse durch die Spritzgießvorrichtung beziehen. Insbesondere kann die Nadelverschlussdüse zwischen einem Verteiler und dem Vorwärmaggregat angeordnet sein. Außerdem kann die Nadelverschlussdüse unmittelbar hinter dem Vorwärmaggregat oder hinter jedem Vorwärmblock angeordnet sein. Auch ist es grundsätzlich möglich, dass das Vorwärmaggregat noch einen Unterverteiler enthält. In diesem Fall kann der Nadelverschluss entweder hinter dem Vorwärmaggregat und dem nachgeschalteten Unterverteiler angeordnet sein oder der Nadelverschluss kann hinter dem Unterverteiler des Vorwärmaggregates und vor dem Vernetzungswerkzeug angeordnet sein.

Bevorzugt liegt die Vorwärmtemperatur im Vorwärmaggregat oberhalb einer Austrittstemperatur der Formmasse aus der Düse des Einspritzaggregates und unterhalb der Vernetzungstemperatur im Vernetzungswerkzeug, wobei die Austrittstemperatur diejenige Temperatur der Formmasse ist, die durch Scherkräfte beim Austritt der Formmasse aus der Düse des Einspritzaggregats entsteht. Die Austrittstemperatur liegt dabei oberhalb der Massetemperatur, da in der Düse zusätzliche Friktionswärme entsteht. Hierdurch lässt sich der Energieeintrag im Vorwärmaggregat reduzieren.

Das Vorwärmaggregat der Spritzgießvorrichtung kann bevorzugt dazu ausgestaltet sein, die Formmasse insbesondere von einer Massetemperatur oder einer Austrittstemperatur auf eine Vorwärmtemperatur zu erwärmen, wobei die Vorwärmtemperatur ausgewählt ist aus einem Temperaturbereich, in dem die Scherviskosität der Formmasse ein Minimum frühestens nach 5 Minuten Vorwärmzeit erreicht, wobei die Scherviskosität der Formmasse spätestens nach 20 Minuten um 20 % gegenüber ihrem Minimum angestiegen ist.

Gemäß einer weiteren Ausgestaltung ist vorgesehen, dass das Einspritzaggregat, das Vorwärmaggregat und das Vernetzungswerkzeug jeweils separate Baumodule sind, die zur Spritzgießvorrichtung zusammensetzbar sind. Durch diesen modularen Aufbau lassen sich problemlos verschiede Vorwärmaggregate und Vernetzungswerkzeuge mit dem Einspritzaggregat kombinieren, wobei dennoch auf Standardmaschinen des Elastomerspritzgusses als Einspritzaggregat zurückgegriffen werden kann. Ein teurer Spezialmaschinenbau für das Einspritzaggregat ist damit nicht notwendig.

Ferner ist denkbar, dass das Einspritzaggregat mit dem Vorwärmaggregat fluidverbunden ist und dass das Vorwärmaggregat mit dem Vernetzungswerkzeug fluidverbunden ist, wobei das Einspritzaggregat, das Vernetzungswerkzeug und das Vorwärmaggregat jeweils gesondert temperierbar ausgestaltet sind. Hierdurch wird gewährleistet, dass sich die Formmasse über den gesamten Spritzgießvorgang in einem geschlossenen System befindet, wobei sie in jedem der drei Module auf die gewünschte Temperatur erhitzt werden kann.

Es kann weiterhin vorgesehen sein, dass das Vorwärmaggregat mittels Heizspindeln und/oder mittels Heizplatten und/oder mittels Heizstäben und/oder mittels eines fluiden Heizmediums beheizt wird. Mithilfe dieser Heizsysteme werden Vorwärmstammwerkzeug und Vorwärmblock bzw. -blöcke auf die gewünschte Vorwärmtemperatur erhitzt. In diesem Fall ist es besonders wirtschaftlich, wenn der oder die einzelnen Vorwärmblöcke kein separates Heizsystem beinhalten, sondern wenn Vorwärmtemperatur mittels Kontaktwäre aus dem beheizten Vorwärmstammwerkzeug aufgenommen wird. Somit muss das Heizsystem nicht auf die individuellen, möglichst passgenau in das Vorwärmstammwerkzeug einsetzbaren Vorwärmblöcke abgestimmt werden, sondern auf das universellere Vorwärmstammwerkzeug.

Erfindungsgemäß weist das Vorwärmaggregat bzw. der Vorwärmblock mindestens einen Vorwärmkanal auf, wobei jeder Vorwärmkanal vorzugsweise in je einem Vorwärmblock integriert ist. Mit anderen Worten: Jeder Vorwärmblock umfasst vorzugsweise einen Vorwärmkanal. Der mindestens eine Vorwärmkanal ist dabei so ausgestaltet, dass die darin aufgenommene Formmasse eine im Verhältnis zu ihrem Volumen möglichst große Oberfläche aufweist. Hierdurch lässt sich die Vorwärmzeit im Vorwärmaggregat verkürzen - also die Zeit, die zur Erwärmung der Formmasse auf die Vorwärmtemperatur benötigt wird - und optimal auf die Vulkanisationszeit im Vernetzungswerkzeug abstimmen. Schließlich sorgt eine im Verhältnis zum Volumen große Oberfläche für einen besonders effizienten Wärmetransport vom Vorwärmaggregat bzw. vom Vorwärmblock auf die im Vorwärmkanal befindliche Formmasse. Auf diese Weise lässt sich der für die Vorwärmung der Formmasse benötigte Energiebedarf verringern. Ein weiterer Vorteil, der sich aus dem bevorzugt ausgestalteten Vorwärmkanal ergibt, besteht darin, dass die Formmasse besonders schonend und unter Minimierung von Friktionen erwärmt werden kann. Hierdurch können Beeinträchtigungen vermieden werden, die andernfalls durch Friktionen oder Scherungen während des Erhitzens auftreten können.

Ferner ist denkbar, dass das Vernetzungswerkzeug mindestens eine Kavität umfasst, in welcher die Formmasse unter der Vernetzungstemperatur zum Elastomerbauteil geformt wird. Als Kavität ist dabei im Wesentlichen eine Spritzgussform zu verstehen, in der die elastomere Formmasse eingespritzt und anschließend zum fertigen Bauteil vernetzt wird. Es kann insbesondere vorgesehen sein, dass der mindestens eine Vorwärmkanal ein Volumen aufweist, das kleiner oder gleich dem Volumen der ihm zugeordneten Kavität bzw. der ihm zugeordneten Kavitäten ist. Hierdurch kann sichergestellt werden, dass sich die gesamte im Vorwärmkanal enthaltene elastomere Masse maximal für die Dauer der Vernetzung des vorherigen Bauteils befindet, bevor sie selbst in die Kavität des Vernetzungsaggregats überführt wird. Mit anderen Worten: Die elastomere Formmasse bleibt nie länger als genau einen Vernetzungszyklus der Vorrichtung im Vorwärmkanal, bevor sie selbst vernetzt wird. Hierdurch kann vermieden werden, dass die Formmasse aufgrund zu langer Verweildauer im Vorwärmkanal bereits teilweise vulkanisiert. Hierdurch kann gewährleistet werden, dass die Formmasse im Vorwärmaggregat auf eine Vorwärmtemperatur erhitzt wird, die möglichst nahe an der Vernetzungstemperatur liegt. Umfasst das Vorwärmaggregat noch Verteiler oder Unterverteiler oder andere auf Vorwärmtemperatur beheizte, mit Formmasse gefüllte Volumina, sodass sich diese zu einem Gesamtvorwärmvolumen addieren, so ist es aus oben beschriebenen Gründen vorteilhaft, wenn das Gesamtvorwärmvolumen kleiner oder gleich ist als das Volumen aller dem Vorwärmaggregat zugeordneten Kavitäten.

Erfindungsgemäß ist der mindestens eine Vorwärmkanal s-förmig und/oder schlangenlinienförmig sigmoidal und/oder mäanderförmig und/oder spiralförmig und/oder zick-zack-förmig und/oder rampenförmig und/oder in Form übereinander angeordneter, flächiger Zonen ausgebildet. Durch diesen Aufbau kann der Vorwärmblock und damit das Vorwärmaggregat insgesamt bei gleichbleibender Effizienz kompakt gehalten werden, da der mindestens eine Vorwärmkanal den im Vorwärmblock zur Verfügung stehenden Platz optimal ausnutzt. Dabei ist vorzugweise eine möglichst große Oberfläche vorteilhaft einzustellen, um einen guten Wärmeübergang mittels Kontaktwärme zu ermöglichen.

Vorteilhafterweise ist der Vorwärmblock dabei so ausgeführt, dass der Vorwärmkanal im Vorwärmblock zumindest bereichsweise außenumfangseitig offen gestaltet ist und nach dem Einsetzen des Vorwärmblockes in das Vorwärmstammwerkzeug mindestens auf einer seiner Seiten vom Vorwärmstammwerkzeug geschlossen ist. Alternativ oder zusätzlich kann eine der Seiten des Vorwärmkanals durch ein separates Bauteil geschlossen werden. Ein solcher seitlich oder nach oben bzw. unten offener Vorwärmkanal im Vorwärmblock lässt sich nach der Demontage des Vorwärmblockes aus dem Vorwärmstammwerkzeug besonders einfach reinigen. Dabei ist es auch möglich, dass das Vorwärmstammwerkzeug zusammen mit dem Vorwärmblock den Vorwärmkanal bildet; das ist insbesondere an den Stellen der Fall, an denen der Vorwärmkanal im Vorwärmblock seitlich offen ausgestaltet ist. Besonders vorteilhaft lassen sich solch komplexe Vorwärmkanalgeometrien im Vorwärmblock mittels 3D-Metalldrucktechniken herstellen.

Es ist außerdem möglich, dass sich im selben Vernetzungswerkzeug verschiedene Bauteilgruppen mit jeweils unterschiedlichen Volumina herstellen lassen. So könnte beispielsweise ein erster Vorwärmkanal mit der "Bauteilgruppe A" verbunden sein, wohingegen ein zweiter Vorwärmkanal mit der "Bauteilgruppe B" verbunden ist, wobei die Bauteile A der Bauteilgruppe A andere Volumina aufweise als die Bauteile B der Bauteilgruppe B. Entsprechend kann vorgesehen sein, dass das Vernetzungswerkzeug verschiedenartige Kavitäten umfasst. Hierdurch lässt sich mit nur einem Vorwärmaggregat eine Vielzahl unterschiedlicher Bauteile herstellen, gleichzeitig aber jeder Vorwärmblock sich optimal an die nachgelagerte Kavität anpassen.

Es kann außerdem vorgesehen sein, dass die Spritzgießvorrichtung einen Verteiler umfasst, wobei der Verteiler vorzugsweise mit dem Einspritzaggregat sowie mit dem mindestens einen Vorwärmblock des Vorwärmaggregats fluidverbunden ist. Mit Hilfe des Verteilers können während eines Spritzgießvorgangs mehrere Bauteile gleichzeitig hergestellt werden. Der Verteiler kann je nach Ausführungsform Teil des Einspritzaggregats ("Kaltkanalprinzip"), Teil des Vorwärmaggregats oder Teil des Vernetzungswerkzeugs ("Heißkanalprinzip") sein und ist jeweils zur Erzeugung oder Aufrechterhaltung der für diese Module vorgesehenen Temperaturen ausgestaltet. So ist es möglich, dass der Verteiler als so genannter Kaltkanalverteiler mit oder ohne Nadelverschlussdüse oder -düsen ausgeführt wird und dem Einspritzaggregat nachgelagert angeordnet ist. In diesem Fall kann der Kaltkanal eine Temperatur zwischen Austrittstemperatur und Vorwärmaggregat aufweisen.

Es ist außerdem denkbar, dass der mindestens eine Vorwärmblock einen Unterverteiler umfasst, der dazu ausgestaltet ist, die Formmasse aus dem Vorwärmkanal auf die Kavitäten des Vernetzungswerkzeugs aufzuteilen. Der Unterverteiler (bzw. im Falle mehrerer Vorwärmeblöcke die Unterverteiler) kann anstelle des Verteilers oder zusätzlich zum Verteiler vorgesehen sein. So kann beispielsweise vorgesehen sein, dass ein Verteiler die Formmasse zunächst von Einspritzaggregat auf eine Vielzahl von Vorwärmeblöcken verteilt. Ein solcher vorgeschalteter Verteiler wird vorteilhaft als Kaltkanal ausgeführt, damit die Formmasse noch nicht im Bereich der Vorverteilung anvulkanisiert. Besonders vorteilhaft wird zwischen Kaltkanalverteiler und Vorwärmaggregat mindestens eine Nadelverschlussdüse angeordnet, um ein Rückströmen der Formmasse aufgrund der Volumenausdehnung im Vorwärmaggregat wirksam zu unterbinden. Anschließend kann dann die mithilfe der in den Vorwärmeblöcken vorgewärmte Formmasse mittels nach dem Vorwärmblöcken angeordneten Unterverteilern auf eine Vielzahl von Kavitäten weiter verteilt werden. Auch ist es möglich, dass mit einem Unterverteiler das herzustellende Bauteil an mehr als einem Einspritzpunkt angedüst wird, was ein schnelleres Befüllen der Kavitäten und/oder eine Fließoptimierung beim Füllen des Bauteils ermöglicht.

Darüber hinaus kann vorgesehen sein, dass die Spritzgießvorrichtung mindestens ein Rückschlagventil umfasst, welches zwischen dem Vorwärmkanal und dem Vernetzungswerkzeugs angeordnet ist. Hierdurch kann gewährleistet werden, dass während des Vernetzungsvorgangs ein ausreichend hoher Druck innerhalb der jeweiligen Kavitäten aufgebaut wird. Darüber hinaus wir ein Rückströmen der Formmasse aus dem Vernetzungswerkzeug in das Vorwärmstammwerkzeug aufgrund der Volumenausdehnung beim Vernetzen wirksam unterbunden. Ein hoher Druck während des Vernetzungsvorgangs führt zu besonders hochwertigen und beständigen Elastomerbauteilen. Dabei können die Rückschlagventile in dafür vorgesehenen Ausnehmungen in einer der Isolationsplatten eingelassen sein. Auch ist es möglich, die Rückschlagventile durch Nadelverschlussdüsen zu substituieren.

Gemäß einer weiteren Ausgestaltung ist vorgesehen, dass die Spritzgießvorrichtung mindestens einen Kühleinsatz umfasst, wobei der Kühleinsatz insbesondere im Vernetzungswerkzeug angeordnet ist und jeder Kühleinsatz dort zumindest teilweise umschließt und/oder thermisch vom Vernetzungswerkzeug zumindest bereichsweise entkoppelt. Auch ist es möglich, dass der Kühleinsatz statt eines Rückschlagventils die Nadelverschlussdüse zumindest teilweise umgibt und/oder thermisch vom Vernetzungswerkzeug zumindest bereichsweise entkoppelt. Dabei kann vorgesehen sein, dass der Kühleinsatz einen dem Vorwärmstammwerkzeug zugewandten Abschnitt der Kavität, beispielsweise eine Durchflussbohrung umschließt. Mit Hilfe des Kühleinsatzes lässt sich das Risko von vernetzten Materialrückständen im Übergang zwischen Vorwärmaggregat und Kavität, der beim Spritzgießen üblicherweise am Bauteil zurückbleibt und als "Angussnippel" bezeichnet wird reduzieren. Solche vernetzten Materialrückstände können ein Qualitätsproblem darstellen. Ferner wird hierdurch verhindert, dass bewegliche Teile, welche mit der Formmasse in Kontakt geraden, wie beispielsweise das Rückschlagventil oder die Nadelverschlussdüse durch das Vernetzen des Elastomers im Angussnippel blockiert werden oder nicht mehr uneingeschränkt und leichtgängig funktionieren.

Ein weiterer Aspekt im Zusammenhang mit der Erfindung betrifft ein Vorwärmaggregat zur Verwendung mit einer Spritzgießvorrichtung zur Herstellung eines elastomeren Bauteils.

Das Vorwärmaggregat umfasst mindestens einen Vorwärmblock und mindestens ein Vorwärmstammwerkzeug, wobei der mindestens eine Vorwärmblock in das mindestens eine Vorwärmstammwerkzeug einsetzbar ist. Vorwärmstammwerkzeug und Vorwärmblöcke sind folglich separate Bauteilkomponenten des Vorwärmaggregates zu verstehen. Der mindestens eine Vorwärmblock weist vorteilhafterweise eine oder mehrere Heizspindeln und/oder eine oder mehrere Heizplatten und/oder einen oder mehrere Heizstäben und/oder eine fluides Heizmedium auf. Mithilfe mindestens eines dieser Heizsysteme wird der Vorwärmblock bzw. werden die Vorwärmeblöcke auf die Vorwärmtemperatur erhitzt.

Dabei ist insbesondere vorgesehen, dass das Vorwärmaggregat an die im Stand der Technik bekannten Vernetzungswerkzeuge angeschlossen werden kann, ohne dass größere konstruktive Änderungen am Vernetzungswerkzeug vorgenommen werden müssten. In der Regel ersetzen das Vorwärmstammwerkzeug und die darauf abgestimmte Verteilung das Angusssystem. Insbesondere aber kann eine Standardmaschine als Einspritzaggregat genutzt werden (auch als "Vulkanisationspresse" bezeichnet), da der Aufbau der Maschine bis zur Düse des Kolbeneinspritzaggregates unverändert genutzt werden kann. Das Vorwärmaggregat soll also im Zusammenhang mit nahezu jeder handelsüblichen Vulkanisationspresse verwendet werden können.

Gemäß einer Weiterentwicklung umfasst der Vorwärmblock des Vorwärmaggregats mindestens einen Vorwärmkanal. Der mindestens eine Vorwärmkanal ist dabei so ausgestaltet, dass die darin aufgenommene Formmasse eine im Verhältnis zu ihrem Volumen möglichst große Oberfläche aufweist. Hierdurch lässt sich die Zeit verkürzen, die zur Erwärmung der Formmasse auf die Vorwärmtemperatur benötigt wird ("Vorwärmzeit"), schließlich sorgt eine im Verhältnis zum Volumen große Oberfläche für einen besonders effizienten Wärmetransport vom Vorwärmaggregat auf die Formmasse. Auf diese Weise lässt sich durch die Zykluszeitreduktion der Gesamtenergiebedarf des Prozesszyklus verringern. Ein weiterer Vorteil, der sich aus dem Vorwärmkanal ergibt, besteht darin, dass die Formmasse besonders schonend und unter Minimierung von Friktionen erwärmt werden kann. Hierdurch kann Beeinträchtigungen durch Molekularabbau im Elastomer der Formmasse vorgebeugt werden, die andernfalls durch Friktionen oder Scherungen während des Erhitzens auftreten können.

Gemäß einer Weiterentwicklung ist vorgesehen, dass der mindestens eine Vorwärmkanal mäanderförmig und/oder spiralförmig und/oder zick-zack-förmig und/oder rampenförmig und/oder s-förmig und/oder schlangenlinienförmig sigmoidal und/oder in Form übereinander angeordneter, flächiger Zonen ausgebildet ist. Durch diesen Aufbau kann das Vorwärmaggregat bei gleichbleibender Effizienz kompakt gehalten werden, da der mindestens eine Vorwärmkanal den im Vorwärmaggregat zur Verfügung stehenden Platz optimal ausnutzt.

Gemäß einem weiteren Aspekt im Zusammenhang mit der Erfindung ist ein Verfahren zur Herstellung eines Elastomerbauteils unter Verwendung der hier beschriebenen Spritzgießvorrichtung vorgesehen, wobei die Spritzgießvorrichtung ein Vernetzungswerkzeug, ein Einspritzaggregat sowie ein Vorwärmaggregat umfasst, wobei das Verfahren die folgenden Schritte umfasst:
a) Befüllen des auf eine Massetemperatur temperierten Einspritzaggregats mit einer elastomeren Formmasse,
b) Erwärmen der Formmasse auf die Massetemperatur mittels Wärmezufuhr aus dem Einspritzaggregat durch Kontaktwärmeeintrag und/oder Wärmeübergang,
c) Überführen der Formmasse vom Einspritzaggregat in das Vorwärmaggregat,
d) Erwärmen der Formmasse im Vorwärmaggregat auf eine Vorwärmtemperatur,
e) Einspritzen der Formmasse vom Vorwärmaggregat in das Vernetzungswerkzeug,
f) Erwärmen der Formmasse im Vernetzungswerkzeug von der Vorwärmtemperatur auf eine Vernetzungstemperatur.

Dabei ist die Vorwärmtemperatur aus einem Temperaturbereich ausgewählt, in dem die Scherviskosität der Formmasse ein Minimum frühestens nach 5 Minuten Vorwärmzeit erreicht, wobei die Scherviskosität der Formmasse spätestens nach 20 Minuten Vorwärmzeit um 20 % gegenüber ihrem Minimum angestiegen ist.

Bevorzugt wird die Formmasse bei der Überführung vom Einspritzaggregat zum Vorwärmaggregat durch Scherung der Formmasse in der Düse des Einspritzaggregates von der Massetemperatur auf eine Austrittstemperatur erwärmt. Entsprechend wird die Formmasse im Vorwärmaggregat nicht von der Massetemperatur auf die Vorwärmtemperatur erhitzt, sondern von der oberhalb der Massetemperatur liegenden Austrittstemperatur.

### Figuren beschreibung

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Längsschnittansicht einer erfindungsgemäßen Spritzgießvorrichtung gemäß einer ersten Ausführungsform;
- Fig. 2: eine Längsschnittansicht einer erfindungsgemäßen Spritzgießvorrichtung gemäß einer weiteren Ausführungsform;
- Fig. 3: eine Längsschnittansicht einer erfindungsgemäßen Spritzgießvorrichtung gemäß einer weiteren Ausführungsform;
- Fig. 4: eine Längsschnittansicht einer erfindungsgemäßen Spritzgießvorrichtung gemäß einer weiteren Ausführungsform;
- Fig. 5: eine Längsschnittansicht einer erfindungsgemäßen Spritzgießvorrichtung gemäß einer weiteren Ausführungsform;
- Fig. 6: eine Längsschnittansicht einer erfindungsgemäßen Spritzgießvorrichtung gemäß einer weiteren Ausführungsform;
- Fig. 7: ein Diagramm, in dem der zeitliche Viskositätsverlauf der elastomeren Formmasse in Abhängigkeit von verschiedenen Versuchstemperaturen aufgetragen ist.

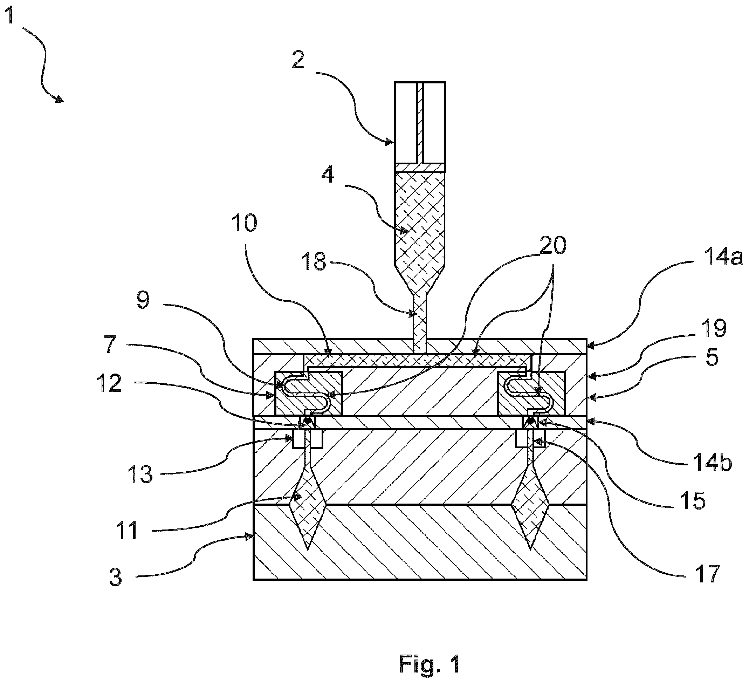

Fig. 1 zeigt in der Längsschnittansicht die erfindungsgemäße Spritzgießvorrichtung 1 gemäß einer ersten Ausführungsform. Die Spritzgießvorrichtung 1 umfasst ein Einspritzaggregat 2 zum Einspritzen der elastomeren Formmasse 4 in ein Vernetzungswerkzeug 3. Dabei ist das Einspritzaggregat 2 sehr vereinfacht und schematisch dargestellt. Häufig ist dem dargestellten Einspritzaggregat 2, hier ein Kolbenaggregat, noch ein Plastifizierextruder vorgeschaltet, welcher das Kolbeneinspritzaggregat befüllt und die Formmasse 4 bereits vorwärmt. Der Plastifizierextruder ist in Fig. 1 nicht gezeigt. Zwischen dem Einspritzaggregat 2 und dem Vernetzungswerkzeug 3 ist ein Vorwärmaggregat 5 angeordnet. Die drei Module Einspritzaggregat 2, Vorwärmaggregat 5 und Vernetzungswerkzeug 3 sind dabei derart miteinander fluidverbunden, dass sich die Formmasse 4 über den gesamten Spritzgießvorgang in einem geschlossenen System befindet.

Das Einspritzaggregat 2 der erfindungsgemäßen Vorrichtung erwärmt nun die Formmasse 4 aufgrund der Temperatur des Einspritzaggregats 2 auf eine als Massetemperatur bezeichnete Ausgangstemperatur. Üblicherweise wird die auf Massetemperatur erwärmte Formmasse 4 als nächstes zur Vulkanisierung in das Vernetzungswerkzeug 3 durch die Düse 18 gespritzt. Demgegenüber ist bei der in Fig. 1 gezeigten Vorrichtung 1 vorgesehen, dass die Formmasse 4 zunächst durch die Düse 18 in das Vorwärmaggregat 5 überführt wird, welches dazu ausgestaltet ist, die Formmasse 4 auf eine Vorwärmtemperatur zu erwärmen. Bei der Vorwärmtemperatur ist die Formmasse 4 idealerweise maximal erhitzt, ohne dabei schon zu vernetzen.

Gemäß der in Fig. 1 gezeigten Ausführungsform umfasst die Spritzgießvorrichtung 1 zwei Isolationsplatten 14a, 14b, wobei die erste Isolationsplatte 14a zwischen dem Vorwärmaggregat 5 und dem Einspritzaggregat 2 angeordnet ist und wobei die die zweite Isolationsplatte 14b zwischen dem Vorwärmaggregat 5 und dem Vernetzungswerkzeug 3 angeordnet ist. Mit Hilfe der Isolationsplatten 14a, 14b wird ein unerwünschter Wärmeaustausch zwischen den Modulen verhindert oder zumindest reduziert. Dabei sorgt die erste Isolationsplatte 14a für eine Wärmeisolation des Vorwärmaggregats 5 gegenüber dem Einspritzaggregat 2 sowie der Umgebung. Die zweite Isolationsplatte 14b sorgt für eine Wärmeisolation des Vorwärmaggregats 5 gegenüber dem Vernetzungswerkzeugs 3 sowie der Umgebung. Das hat zur Folge, dass die zum Vorwärmen der Formmasse 4 benötigte Temperatur im Vorwärmaggregat 5 weder durch die vergleichsweise niedrigere Temperatur des Einspritzaggregats 2 oder der Umgebung herabgesenkt noch durch die vergleichsweise höhere Temperatur des Vernetzungswerkzeugs 3 angehoben wird. Hierdurch wird die Effizienz des Vorwärmaggregats 5 optimiert.

Die in Fig. 1 gezeigte Spritzgießvorrichtung 1 umfasst außerdem einen Verteiler 10, wobei der Verteiler 10 hier dem Vorwärmaggregat 5 zugeordnet ist ("Warmverteiler-Prinzip"), da der Verteiler und das Vorwärmaggregat 5 in etwa auf die gleiche Temperatur beheizt wird. Das bedeutet, dass der Verteiler 10 dazu ausgestaltet ist, die Vorwärmtemperatur zu erzeugen und/oder aufrechtzuerhalten, ohne dass eine Vernetzung im Verteiler 10 stattfindet ("Heißkanalprinzip"). Um zu verhindern, dass es zwischen dem im Vorwärmaggregat 5 angeordneten Verteiler 10 und dem Einspritzaggregat 2 zu einem unerwünschten Wärmeaustausch kommt oder dass der Verteiler 10 Wärme an seine Umgebung abgibt, ist der Verteiler 10 von einer ersten Isolationsplatte 14a bedeckt. Der Verteiler 10 ist mit dem Einspritzaggregat 2 und mit den Vorwärmeblöcken 7 des Vorwärmaggregats 5 fluidverbunden, sodass die Formmasse 4 auf die einzelnen Vorwärmeblöcke 7 verteilt werden kann (im Längsschnitt der Fig. 1 sind nur zwei Vorwärmeblöcke 7 gezeigt). Dabei sind als die Vorwärmblöcke 7 separat gefertigte Komponenten ausgeführt, die in das Vorwärmstammwerkzeug 19 eingesetzt sind. Verteiler 10, Vorwärmstammwerkzeug 19 und Vorwärmblöcke 7 bilden hier die Hauptkomponenten des Vorwärmaggregats 5. Eine Verteilung der Formmasse 4 im Vorwärmaggregat 5, welches eine Temperatur unterhalb der Vernetzungstemperatur aufweist, wie es bei sonst üblichen Heißkanalverteilern der Fall ist, trägt zu einer Minimierung der Menge an Gummiabfall bei, die üblicherweise beim Spritzgießen von Elastomerbauteilen mit Heißkanalverteiler entsteht.

Jeder Vorwärmblock 7 wird indirekt über Kontaktwärme aus dem Vorwärmstammwerkzeug 19 beheizt. Es ist aber auch möglich, dass jeder Vorwärmblock 7 zusätzlich zur Kontaktwärme aus dem Vorwärmstammwerkzeug 19 oder ausschließlich beispielsweise mittels Heizstäben oder Heizspindeln direkt beheizt wird. Wie in Fig. 1 gezeigt ist, kann jeder Vorwärmblock 7 einen mäanderförmigen Vorwärmkanal 9 umfassen. Die Vorwärmekanäle 9 sind dabei so ausgestaltet, dass die jeweils darin aufgenommene Formmasse 4 eine zu ihrem Volumen möglichst große Oberfläche aufweist. Auf diese Weise lässt sich der für die Vorwärmung der Formmasse benötigte Energiebedarf verringern, da der Wärmetransfer vom Vorwärmblock 7 auf die Formmasse 4 optimiert wird.

Das Vorwärmaggregat 5, welches gemäß dem in Fig. 1 gezeigten Beispiel zwischen der ersten Isolationsplatte 14a und der zweiten Isolationsplatte 14b angeordnet ist, umfasst vorteilhafterweise eine Mehrzahl von (in der Schnittansicht) mäanderförmig verlaufenden Vorwärmekanälen 10, von denen im Längsschnitt zwei dargestellt sind. Solche Strukturen lassen sich beispielsweise mittels 3D-Druck einfach herstellen. Die Vorwärmekanäle 10 sind mit dem Verteiler 10 fluidverbunden und so ausgestaltet, dass die aufgenommene Formmasse 4 eine im Verhältnis zu ihrem Volumen möglichst große Oberfläche aufweist.

Das in Fig. 1 gezeigte Vernetzungswerkzeug 3 umfasst mehrere Kavitäten 11, von denen in der Längsschnittansicht nur zwei dargestellt sind. Erfindungsgemäß wird die vorgewärmte Formmasse 4 aus den Vorwärmekanälen 10 in die Kavitäten 11 gespritzt und dort unter der Vernetzungstemperatur zum Elastomerbauteil geformt, wobei gemäß Fig. 1 jedem Vorwärmkanal 9 je eine Kavität 11 zugeordnet ist. Wie in Fig. 1 zu sehen ist, weist jeder Vorwärmkanal 9 ein Volumen auf, das kleiner ist als die ihm zugeordnete Kavität 11 des Vernetzungswerkzeugs 3. Auf diese Weise wird sichergestellt, dass die gesamte elastomere Masse 4, die sich jeweils während eines Vernetzungsschritts noch im Vorwärmkanal 9 befindet, maximal für die Dauer des Vernetzungsschritts der vorherigen Bauteile im Kanal 9 bleibt, bevor sie selbst in die Kavität 11 des Vernetzungswerkzeugs 5 überführt wird. Betrachtet man das Gesamtvorwärmvolumen der Formmasse 4 im Vorwärmaggregat 5, also das Volumen im Verteiler 10 sowie in den Vorwärmkanälen 9 der Vorwärmblöcke 7, so ist dieses Volumen im besten Fall höchstens so groß wie das Volumen der Formmasse 4 im Vernetzungswerkzeug 3 und somit maximal so groß wie das Volumen der Formmasse 4 in allen Kavitäten 11 zusammen. Dabei zählt das gekühlte Volumen im Kühleinsatz 13 noch zum Gesamtvorwärmvolumen.

Die in Fig. 1 gezeigte Vorrichtung 1 weist darüber hinaus Rückschlagventile 12 auf, die zwischen den Vorwärmekanälen 10 und den Kavitäten 11 angeordnet sind. Im Falle des gezeigten Ausführungsbeispiels sind die Rückschlagventile 12 in dafür vorgesehenen Ausnehmungen 15 der zweiten Isolationsplatte 14b angeordnet. Die Rückschlagventile 12 sorgen dafür, dass während des Vernetzungsvorgangs ein ausreichend hoher Druck innerhalb der Kavitäten 11 aufgebaut werden kann und kein vernetztes Elastomer in das Vorwärmaggregat 5 mittels Wärmeausdehnung zurückgedrückt wird.

Wie in Fig. 1 gezeigt ist, kann die Spritzgießvorrichtung 1 außerdem Kühleinsätze 13 umfassen, wobei in Fig. 1 nur zwei Kühleinsätze 13 dargestellt sind. Jeder Kühleinsatz 13 ist bevorzugt im Vernetzungswerkzeug angeordnet ist und umschließt die Kavitäten 11 zumindest teilweise. Gemäß Fig. 1 kann dabei vorgesehen sein, dass der Kühleinsatz 13 den oberen, kanalförmigen Abschnitt 17 der Kavität 11 umschließt, d. h. den Abschnitt der Kavität 11, der in Richtung des Vorwärmkanals 9 gerichtet ist. Die Kühleinsätze 13 verhindern, dass die Formmasse 4 im Rückschlagventil 12 vollständig vernetzen kann und somit die Funktion der Rückschlagventile 12 einschränkt.

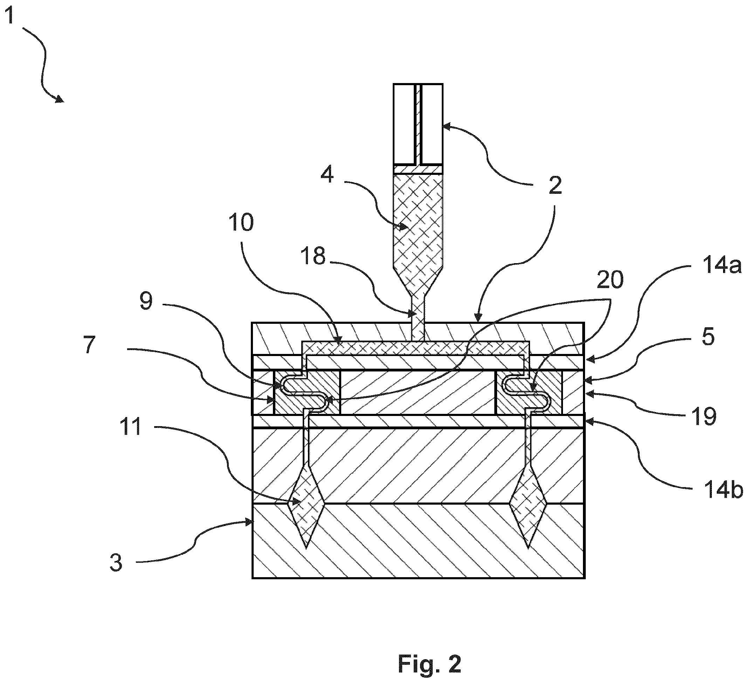

Fig. 2 zeigt eine Längsschnittansicht der erfindungsgemäßen Spritzgießvorrichtung 1 gemäß einer weiteren Ausführungsform. Ein Unterschied zur Ausführungsform aus Fig. 2 besteht darin, dass der Verteiler 10 gemäß Fig. 2 dem Einspritzaggregat 2 zugeordnet ist ("Kaltkanal-Prinzip"). Das bedeutet, dass der Verteiler 10 dazu ausgestaltet ist, die Massetemperatur aufrechtzuerhalten. Um zu vermeiden, dass es zwischen dem Vorwärmaggregat 5 und dem im Einspritzaggregat 2 angeordneten Verteiler 10 zu einem unerwünschten Wärmeaustausch kommt, sind der Verteiler 10 des Einspritzaggregats 2 und das Vorwärmaggregat 5 durch eine erste Isolationsplatte 14a getrennt. Der Verteiler 10 ist mit den Vorwärmeblöcken 7 des Vorwärmaggregats 5 fluidverbunden, sodass die Formmasse 4 auf die einzelnen Vorwärmeblöcke 7 verteilt werden kann. Die Formmasse 4, die mit Massetemperatur vom Einspritzaggregat in den Verteiler 10 überführt wird, kann bereits im Verteiler 10 auf eine Temperatur erhitzt werden, die knapp unter der gewünschten Vorwärmtemperatur liegt. Das eigentliche Erhitzen der Formmasse 4 auf die Vorwärmtemperatur erfolgt anschließend in den Vorwärmeblöcken 7 des Vorwärmaggregats 5. Damit besteht das Vorwärmgesamtvolumen 20 ausschließlich aus den Volumina der Vorwärmkanäle 9 in den Vorwärmblöcken 7. Theoretisch kann der Vorwärmkanal 9 zusätzlich noch bereichsweise durch das Vorwärmstammwerkzeug 19 ausgebildet sein, was hier aber nicht dargestellt ist.

Wie im Falle des Ausführungsbeispiels aus Fig. 1 ist auch gemäß Fig. 2 vorgesehen, dass die Formmasse 4 auf eine Vielzahl von Vorwärmeblöcken 7 verteilt wird, wobei jeder Vorwärmblock 7 mit je einer Kavität 11 fluidverbunden ist. Mit anderen Worten: Jede Kavität 11 verfügt über ihren "eigenen" Vorwärmblock 7. Wie in Fig. 2 zu sehen ist, weist jeder Vorwärmkanal 9 ein Volumen auf, das kleiner ist als die ihm zugeordnete Kavität 11 des Vernetzungswerkzeugs 3. Auch ist das Vorwärmgesamtvolumen 20 kleiner als die Summe der Volumina der Formmasse 4 in allen Kavitäten 11.

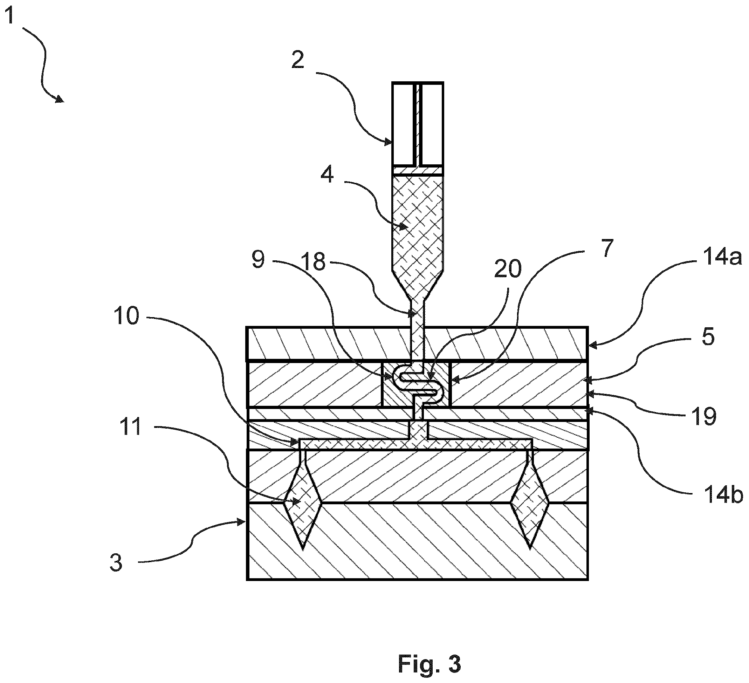

Fig. 3 zeigt eine Längsschnittansicht einer erfindungsgemäßen Spritzgießvorrichtung 1 gemäß einer weiteren Ausführungsform. Die gezeigte Spritzgießvorrichtung 1 umfasst ein Einspritzaggregat 2, ein Vorwärmaggregat 5 und ein Vernetzungswerkzeug 3, welche derart miteinander sind, dass sie ein fluiddichtes System bilden, durch das die Formmasse 4 verlaufen kann. Bei dem in Fig. 3 gezeigten Beispiel handelt es sich um eine Spritzgießvorrichtung 1 nach dem "Heißkanal-Prinzip". Das bedeutet, dass der Verteiler 10 im Vernetzungswerkzeug 3 angeordnet ist und dazu ausgestaltet ist, eine Vernetzungstemperatur zu erzeugen und/oder aufrechtzuerhalten. Die Verteilung der Formmasse 4 auf die Kavitäten 11 erfolgt also erst, nachdem sie im Vorwärmaggregat auf Vorwärmtemperatur erhitzt worden ist.

Eine nach dem Heißkanal-Prinzip ausgestaltete Spritzgießvorrichtung 1 ermöglicht ein kostengünstiges Werkzeug, da das Vorwärmaggregat 5 nur einen Vorwärmblock 7 umfasst, mit dem die gesamte Formmasse 4 auf Vorwärmtemperatur erhitzt wird. Damit kann eine eventuell benötigte Rückstromsperre, wie z. B. eine Nadelverschlussdüse 6 oder ein Rückschlagventil 12, auf ein einziges Exemplar reduziert werden (in Fig. 2 nicht gezeigt). Eine Verteilung der Formmasse 4 erfolgt erst im Anschluss an den Schritt des Erhitzens der Frommasse 4 auf Vorwärmtemperatur, wobei die vorgewärmte Formmasse 4 hier auf die Kavitäten 11 verteilt wird und nicht - wie in den Beispielen der Fig. 1 oder Fig. 2 gezeigt - zunächst auf die dort in Mehrzahl vorgesehenen Vorwärmeblöcke 7. Aufgrund des Betriebs nur eines Vorwärmblocks 7 anstelle einer Vielzahl von Vorwärmeblöcken 7, lassen sich mit dem Heißkanal-Prinzip Werkzeugkosten einsparen.

Analog zu den Ausführungsbeispielen der Fig. 1 und der Fig. 2 umfasst die in Fig, 3 dargestellte Spritzgießvorrichtung 1 eine erste Isolationsplatte 14a und eine zweite Isolationsplatte 14b, wobei das Vorwärmaggregat 5 zwischen der ersten und der zweiten Isolationsplatte 14a, 14b angeordnet ist.

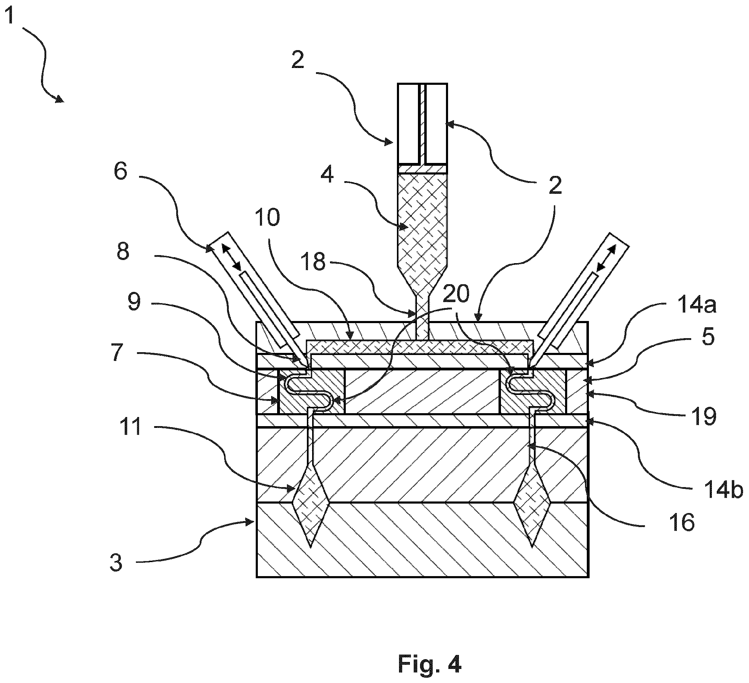

In Fig. 4 ist eine Längsschnittansicht einer erfindungsgemäßen Spritzgießvorrichtung 1 gemäß einer weiteren Ausführungsform gezeigt. Die Spritzgießvorrichtung 1 aus Fig. 4 entspricht im Wesentlichen der in Fig. 2 gezeigten Spritzgießvorrichtung 1 mit dem Unterschied, dass die Spritzgießvorrichtung 1 aus Fig. 4 Nadelverschlussdüsen 6 mit Nadelverschluss 8 umfasst. Mit Hilfe des Nadelverschlusses 8 wird ein unerwünschter Gummirückfluss aus dem Vorwärmaggregat 5 in den Verteiler 10 (hier "Kaltkanalprinzip") aufgrund der Wärmeausdehnung im Vorwärmaggregat 5 und/oder dem Vernetzungswerkzeug 3 vermieden.

Bei dem in Fig. 4 gezeigten Beispiel ist vorgesehen, dass die Nadelverschlussdüsen 6 jeweils zwischen dem Einspritzaggregat 2 und dem Vorwärmaggregat 5 und somit - auf den Verlauf der Formmasse 4 durch die Spritzgießvorrichtung 1 bezogen - vor den Vorwärmeblöcken 7 angeordnet sind. Diese Anordnung kann vorteilhaft sein, da die Nadelverschlussdüsen 6 nur durch den Verteiler 10 geführt werden müssen, was einfach in der Herstellung ist und damit kostengünstig und robust.

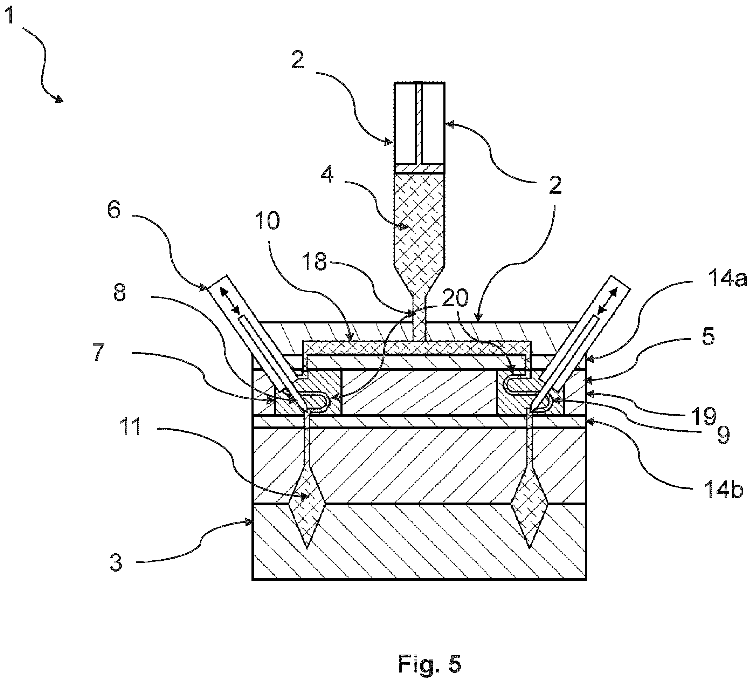

Fig. 5 zeigt eine Längsschnittansicht einer erfindungsgemäßen Spritzgießvorrichtung 1 gemäß einer weiteren Ausführungsform. Die Spritzgießvorrichtung 1 entspricht im Wesentlichen der Spritzgießvorrichtung 1 aus Fig. 4 mit dem Unterschied, dass die Nadelverschlussdüsen 6 mit Nadelverschluss 8 bei dem in Fig. 5 gezeigten Ausführungsbeispiel jeweils zwischen dem Vorwärmaggregat 5 und dem Vernetzungswerkzeug 3 und somit - auf den Verlauf der Formmasse 4 durch die Spritzgießvorrichtung 1 bezogen - nach bzw. hinter den Vorwärmeblöcken 7 angeordnet sind. Der Nadelverschluss 8 liegt somit unmittelbar an den kanalartigen Abschnitten der Kavitäten 11 im Vernetzungswerkzeug 3 an. Hierdurch kann der beim Spritzen auftretende Gummirückfluss noch effektiver gestoppt werden.

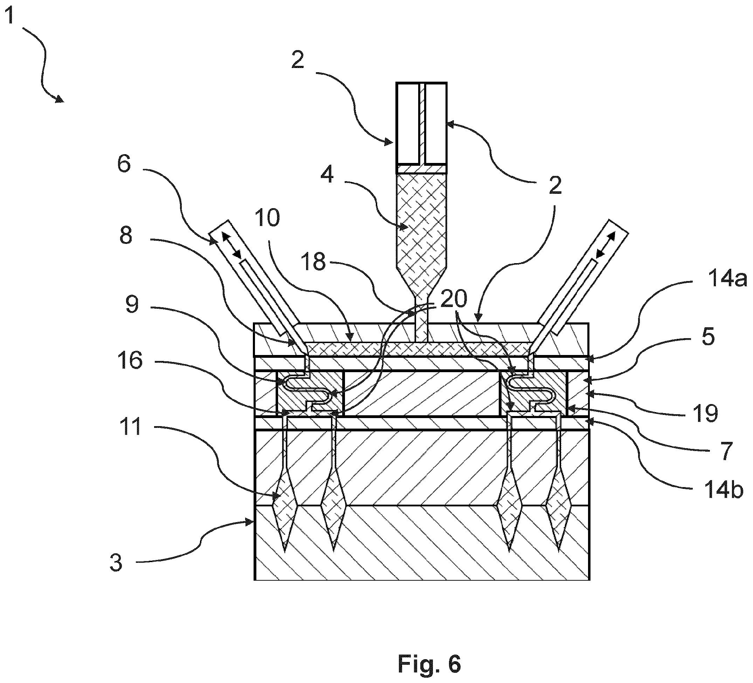

In Fig. 6 ist eine Längsschnittansicht einer erfindungsgemäßen Spritzgießvorrichtung 1 gemäß einer weiteren Ausführungsform gezeigt. Die Spritzgießvorrichtung 1 der Fig. 6 entspricht im Wesentlichen der Spritzgießvorrichtung 1 aus Fig. 4 mit dem Unterschied, dass die Vorwärmeblöcke 7 gemäß dem Ausführungsbeispiel aus Fig. 6 jeweils eine Unterverteiler 16 aufweisen. Mit Hilfe des Unterverteilers 16 ist es möglich die Formmasse 4 aus dem Vorwärmkanal auf mehrere Einspritzpunkte der Kavitäten 11 des Vernetzungswerkzeugs zu verteilen. Auch ist es möglich, dass die Unterverteiler 16 Teil des Vorwärmstammwerkzeuges 19 sind oder als separate Bauteile innerhalb des Vorwärmaggregates 5 ausgeführt werden. Auch eine Anordnung des Unterverteilers 16 innerhalb des Vernetzungswerkzeuges ("Heißkanalunterverteilung"; nicht dargestellt) ist grundsätzlich denkbar.

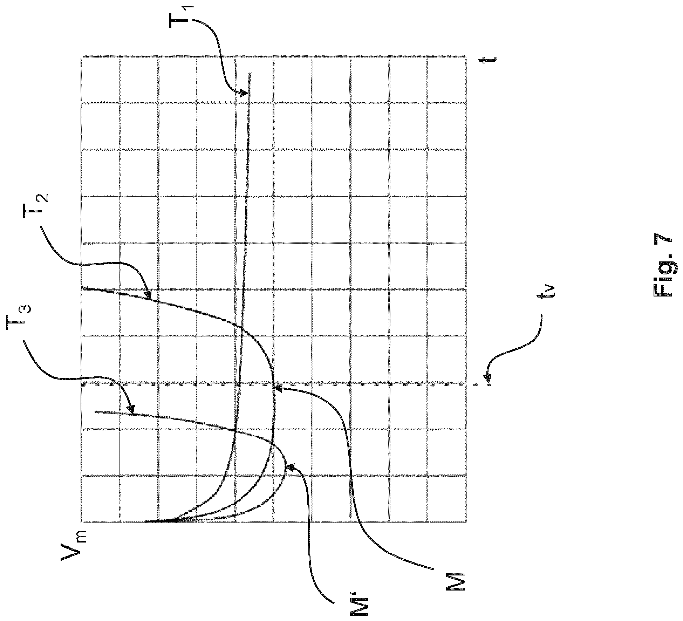

Fig. 7 umfasst ein Diagramm des zeitlichen Viskositätsverlaufs der elastomeren Formmasse 4 in Abhängigkeit einer Versuchstemperatur T₁, T₂, T₃. Dabei ist entlang der Ordinate die Mooney-Viskosität Vₘ der Formmasse 4 aufgetragen. Die Zeit t ist durch die Abszisse angegeben. Die Vertikallinie tᵥ zeigt schließlich die zum Vorwärmen der Formmasse 4 vorgesehene Vorwärmzeit. Dabei sollte die Vorwärmzeit tᵥ die Gesamtzykluszeit möglichst nicht verlängern; somit wird die für die Vorwärmzeit tᵥ zur Verfügung stehende Zeit durch die für den optimalen Vernetzungsgrad des Bauteils im Vernetzungswerkzeug 3 benötigte Zeit maßgeblich bestimmt. Im Falle der ersten Versuchstemperatur T₁ ist dem Diagramm zu entnehmen, dass die gemessene Viskosität Vₘ ihr Minimum nicht erreicht. Es kommt folglich im beobachteten Zeitraum zu keiner Vernetzung der Formmasse 4. Die gewählte erste Versuchstemperatur T₁ ist also ausreichend niedrig, um als Vorwärmtemperatur zu fungieren, da eine Vernetzung der Formmasse 4 im Vorwärmaggregat 5 verhindert wird. Dennoch eignet sich die Versuchstemperatur T₁ nicht als bevorzugte Vorwärmtemperatur im Sinne der Erfindung, da die Vernetzung der Formmasse, die sich an das Vorwärmen der Formmasse anschließt, kaum beschleunigt wird.

Dem gegenüber wird das Minimum M' der Viskosität Vₘ der Formmasse 4 im Falle der Versuchstemperatur T₃ bereits vor dem Ende der Vorwärmzeit tᵥ erreicht. Folglich eignet sich die Versuchstemperatur T₃ ebenfalls nicht als Vorwärmtemperatur im Sinne der Erfindung, denn die Formmasse 4 würde bei dieser Vorwärmtemperatur bereits im Vorwärmaggregat (zumindest teilweise) vernetzen oder vulkanisieren.

Die Versuchstemperatur T₂ des Diagramms in Fig. 7 eignet sich hingegen sehr gut als Vorwärmtemperatur. Schließlich ist T₂ so gewählt, dass die Formmasse innerhalb der Vorwärmzeit tᵥ die gerade noch nicht zu vernetzen beginnt oder nur ganz leicht anfängt zu vernetzen, ohne dass die Viskosität signifikant, das heißt mehr als 20 % gegenüber dem Minimum M ansteigt. Das Minimum M der Viskosität Vₘ wird erst kurz vor dem Ende der Vorwärmzeit tᵥ erreicht und steigt erst nach dem Ende der Vorwärmzeit wieder deutlich an. Mit anderen Worten: Mit einer Vorwärmtemperatur, die im Wesentlichen T₂ entspricht, wird die Formmasse 4 im Vorwärmaggregat 5 möglichst nahe an die gewünschte Vernetzungstemperatur erhitzt, ohne jedoch schon im Vorwärmaggregat 5 zu vulkanisieren oder, falls die Vernetzung gerade beginnt, der Vernetzungsgrad noch so gering ist, dass die Viskosität nicht mehr als 20 % gegenüber dem Minimum M ansteigt. Entsprechend kann die eigentliche Vulkanisation der Formmasse 4 im Vernetzungswerkzeug 3 mit maximaler Geschwindigkeit ablaufen, da die Formmasse bereits mit einer maximalen hohen Temperatur in das Vernetzungswerkzeug 3 gespritzt wird.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Spritzgießvorrichtung
- 2: Einspritzaggregat
- 3: Vernetzungswerkzeug
- 4: Formmasse
- 5: Vorwärmaggregat
- 6: Nadelverschlussdüse
- 7: Vorwärmblock
- 8: Nadelverschluss
- 9: Vorwärmkanal
- 10: Verteiler
- 11: Kavität
- 12: Rückschlagventil
- 13: Kühleinsatz
- 14: Isolationsplatte
- 14a: Erste Isolationsplatte
- 14b: Zweite Isolationsplatte
- 15: Ausnehmung
- 16: Unterverteiler
- 17: Oberer Abschnitt
- 18: Düse
- 19: Vorwärmstammwerkzeug
- 20: Gesamtvorwärmvolumen

- tᵥ: Vorwärmzeit
- Vₘ: Mooney-Viskosität
- T₁: Erste Versuchstemperatur
- T₂: Zweite Versuchstemperatur
- T₃: Dritte Versuchstemperatur
- M: Minimum

## Patentansprüche

1. Spritzgießvorrichtung (1) zur Herstellung eines Elastomerbauteils, wobei die Spritzgießvorrichtung (1) ein Einspritzaggregat (2) mit einer Düse (18) zum Spritzen einer elastomeren Formmasse (4) und ein Vernetzungswerkzeug (3) zum Vernetzen der Formmasse (4) umfasst, wobei das Einspritzaggregat (2) dazu ausgestaltet ist, die Formmasse (4) auf eine Massetemperatur zu erwärmen, und wobei das Vernetzungswerkzeug (3) dazu ausgestaltet ist, die Formmasse (4) auf eine Vernetzungstemperatur zu erwärmen, wobei die Spritzgießvorrichtung (1) ein Vorwärmaggregat (5) umfasst, das dazu ausgestaltet ist, die Formmasse (4) auf eine Vorwärmtemperatur zu erwärmen, wobei die Vorwärmtemperatur im Vorwärmaggregat (5) oberhalb der Massetemperatur im Einspritzaggregat (2) und unterhalb der Vernetzungstemperatur im Vernetzungswerkzeug (3) liegt, **dadurch gekennzeichnet, dass** das Vorwärmaggregat (5) mindestens einen Vorwärmblock (7) und mindestens ein Vorwärmstammwerkzeug (19) umfasst, wobei der mindestens eine Vorwärmblock (7) in das mindestens eine Vorwärmstammwerkzeug (19) einsetzbar ist und einen Vorwärmkanal (9) umfasst, der s-förmig und/oder schlangenlinienförmig sigmoidal und/oder mäanderförmig und/oder spiralförmig und/oder zick-zack-förmig und/oder rampenförmig und/oder in Form übereinander angeordneter, flächiger Zonen ausgebildet ist.

2. Spritzgießvorrichtung (1) nach Anspruch 1, **dadurch gekennzeichnet, dass** das Vorwärmaggregat (5) mindestens eine Nadelverschlussdüse (6) mit einem Nadelverschluss (8) umfasst.

3. Spritzgießvorrichtung (1) nach einem der vorhergehenden Ansprüche, **dadurch gekennzeichnet, dass** die Vorwärmtemperatur im Vorwärmaggregat (5) oberhalb einer Austrittstemperatur der Formmasse und unterhalb der Vernetzungstemperatur im Vernetzungswerkzeug (3) liegt, wobei die Austrittstemperatur diejenige Temperatur der Formmasse (4) ist, die durch Scherkräfte beim Austritt der Formmasse aus der Düse (18) des Einspritzaggregats (2) entsteht.

4. Spritzgießvorrichtung (1) nach einem der vorhergehenden Ansprüche, **dadurch gekennzeichnet, dass** das Einspritzaggregat (2), das Vorwärmaggregat (5) und das Vernetzungswerkzeug (3) jeweils separate Baumodule sind, die zur Spritzgießvorrichtung (1) zusammensetzbar sind.

5. Spritzgießvorrichtung (1) nach einem der vorhergehenden Ansprüche, **dadurch gekennzeichnet, dass** das Vernetzungswerkzeug (3) mindestens eine Kavität (11) umfasst, in welcher die Formmasse (4) unter der Vernetzungstemperatur zum Elastomerbauteil geformt wird.

6. Spritzgießvorrichtung (1) nach einem der vorhergehenden Ansprüche, **dadurch gekennzeichnet, dass** der mindestens eine Vorwärmkanal (9) ein Volumen aufweist, das kleiner oder gleich dem Volumen der ihm zugeordneten mindestens einen Kavität (13) des Vernetzungswerkzeugs (3) ist.

7. Spritzgießvorrichtung (1) nach einem der vorhergehenden Ansprüche, **dadurch gekennzeichnet, dass** die Spritzgießvorrichtung (1) einen Verteiler (10) umfasst, der dazu ausgestaltet ist, die Formmasse (4) auf zwei oder mehr Vorwärmeblöcke (7) oder auf zwei oder mehr Kavitäten (11) aufzuteilen.

8. Spritzgießvorrichtung (1) nach einem der vorhergehenden Ansprüche, **dadurch gekennzeichnet, dass** das mindestens eine Vorwärmstammwerkzeug (19) einen Unterverteiler (16) umfasst, der dazu ausgestaltet ist, die Formmasse (4) aus dem Vorwärmkanal (9) auf zwei oder mehr Kavitäten (11) aufzuteilen.

9. Spritzgießvorrichtung (1) nach einem der vorhergehenden Ansprüche, **dadurch gekennzeichnet, dass** die Spritzgießvorrichtung (1) mindestens ein Rückschlagventil (12) umfasst, welches zwischen dem Vorwärmkanal (9) und dem Vernetzungswerkzeug (3) angeordnet ist.

10. Spritzgießvorrichtung (1) nach Anspruch 9, **dadurch gekennzeichnet, dass** die Spritzgießvorrichtung (1) mindestens einen Kühleinsatz (13) umfasst, wobei der Kühleinsatz (13) insbesondere im Vernetzungswerkzeug (5) angeordnet ist und wobei jeder Kühleinsatz (13) je eines der Rückschlagventile (12) zumindest teilweise umschließt und/oder thermisch vom Vernetzungswerkzeug (3) zumindest bereichsweise entkoppelt.

## Claims

1. Injection moulding device (1) for producing an elastomer component, wherein the injection moulding device (1) has an injection unit (2) with a nozzle (18) for injecting an elastomeric moulding compound (4) and a cross-linking tool (3) for cross-linking the moulding compound (4), wherein the injection unit (2) is designed to heat the moulding compound (4) to a compound temperature, and wherein the cross-linking tool (3) is designed to heat the moulding compound (4) to a cross-linking temperature, wherein the injection moulding device (1) comprises a preheating unit (5) designed to heat the moulding compound (4) to a preheating temperature, the preheating temperature in the preheating unit (5) being above the compound temperature in the injection unit (2) and below the cross-linking temperature in the cross-linking tool (3), **characterised in that** the preheating unit (5) comprises at least one preheating block (7) and at least one preheating master mould (19), wherein the at least one preheating block (7) can be inserted into the at least one preheating master mould (19) and comprises a preheating channel (9) which is s-shaped and/or serpentine, sigmoidal and/or meandering and/or spiral and/or zigzag and/or ramp-shaped and/or in the form of flat zones arranged one above the other.

2. Injection moulding device (1) according to claim 1, **characterised in that** the preheating unit (5) comprises at least one needle valve nozzle (6) with a needle valve (8).

3. Injection moulding device (1) according to one of the preceding claims, **characterised in that** the preheating temperature in the preheating unit (5) is above an outlet temperature of the moulding compound and below the cross-linking temperature in the cross-linking tool (3), wherein the outlet temperature is the temperature of the moulding compound (4) which is produced by shear forces when the moulding material exits the nozzle (18) of the injection unit (2).

4. Injection moulding device (1) according to one of the preceding claims, **characterised in that** the injection unit (2), the preheating unit (5) and the cross-linking tool (3) are each separate construction modules which can be assembled to form the injection moulding device (1).

5. Injection moulding device (1) according to one of the preceding claims, **characterised in that** the cross-linking tool (3) comprises at least one cavity (11) in which the moulding compound (4) is moulded into the elastomer component below the cross-linking temperature.

6. Injection moulding device (1) according to one of the preceding claims, **characterised in that** the at least one preheating channel (9) has a volume that is smaller than or equal to the volume of the at least one cavity (13) of the cross-linking tool (3) assigned to it.

7. Injection moulding device (1) according to one of the preceding claims, **characterised in that** the injection moulding device (1) comprises a distributor (10) which is designed to distribute the moulding compound (4) to two or more preheating blocks (7) or to two or more cavities (11).

8. Injection moulding device (1) according to one of the preceding claims, **characterised in that** the at least one preheating master mould (19) comprises a sub-distributor (16) which is designed to distribute the moulding compound (4) from the preheating channel (9) to two or more cavities (11).

9. Injection moulding device (1) according to one of the preceding claims, **characterised in that** the injection moulding device (1) comprises at least one non-return valve (12) which is arranged between the preheating channel (9) and the cross-linking tool (3).

10. Injection moulding device (1) according to claim 9, **characterised in that** the injection moulding device (1) comprises at least one cooling insert (13), wherein the cooling insert (13) is arranged in particular in the cross-linking tool (5) and wherein each cooling insert (13) at least partially surrounds one of the non-return valves (12) and/or is thermally decoupled from the cross-linking tool (3) at least in some areas.

## Revendications

1. Dispositif de moulage par injection (1) pour la fabrication d'un composant élastomère, le dispositif de moulage par injection (1) comprenant un groupe d'injection (2) avec une buse (18) pour injecter une masse moulable élastomère (4) et un outil de réticulation (3) pour réticuler la masse moulable (4), le groupe d'injection (2) étant conçu pour chauffer la masse moulable (4) à une température de masse, et l'outil de réticulation (3) étant conçu pour chauffer la masse moulable (4) à une température de réticulation, le dispositif de moulage par injection (1) comprend un groupe de préchauffage (5) qui est conçu pour chauffer la masse moulable (4) à une température de préchauffage, la température de préchauffage dans le groupe de préchauffage (5) étant supérieure à la température de la masse dans le groupe d'injection (2) et inférieure à la température de réticulation dans l'outil de réticulation (3), **caractérisé en ce que** le groupe de préchauffage (5) comprend au moins un bloc de préchauffage (7) et au moins un outil de préchauffage (19), le au moins un bloc de préchauffage (7) pouvant être inséré dans le au moins un outil de préchauffage (19) et comprenant un canal de préchauffage (9) qui est en forme de s et/ou en forme de serpent, sigmoïdal et/ou en forme de méandre et/ou en forme de spirale et/ou en forme de zigzag et/ou en forme de rampe et/ou sous la forme de zones planes superposées.

2. Dispositif de moulage par injection (1) selon la revendication 1, **caractérisé en ce que** le groupe de préchauffage (5) comprend au moins une buse à obturateur à aiguille (6) avec un obturateur à aiguille (8).

3. Dispositif de moulage par injection (1) selon l'une des revendications précédentes, **caractérisé en ce que** la température de préchauffage dans le groupe de préchauffage (5) est supérieure à une température de sortie de la masse moulable et inférieure à la température de réticulation dans l'outil de réticulation (3), la température de sortie étant la température de la masse moulée (4), qui est générée par les forces de cisaillement lors de la sortie de la masse moulée de la buse (18) du groupe d'injection (2).

4. Dispositif de moulage par injection (1) selon l'une des revendications précédentes, **caractérisé en ce que** le groupe d'injection (2), le groupe de préchauffage (5) et l'outil de réticulation (3) sont chacun des modules de construction séparés qui peuvent être assemblés pour former le dispositif de moulage par injection (1).

5. Dispositif de moulage par injection (1) selon l'une des revendications précédentes, **caractérisé en ce que** l'outil de réticulation (3) comprend au moins une cavité (11) dans laquelle la masse moulable (4) est moulée à une température inférieure à la température de réticulation pour former un composant élastomère.

6. Dispositif de moulage par injection (1) selon l'une des revendications précédentes, **caractérisé en ce que** le au moins un canal de préchauffage (9) présente un volume qui est inférieur ou égal au volume de la au moins une cavité (13) de l'outil de réticulation (3) qui lui est associée.

7. Dispositif de moulage par injection (1) selon l'une des revendications précédentes, **caractérisé en ce que** le dispositif de moulage par injection (1) comprend un distributeur (10) qui est conçu pour répartir la masse moulable (4) sur deux ou plusieurs blocs de préchauffage (7) ou sur deux ou plusieurs cavités (11).

8. Dispositif de moulage par injection (1) selon l'une des revendications précédentes, **caractérisé en ce que** le au moins un outil de préchauffage (19) comprend un distributeur secondaire (16) qui est conçu pour répartir la masse moulable (4) provenant du canal de préchauffage (9) sur deux ou plusieurs cavités (11).

9. Dispositif de moulage par injection (1) selon l'une des revendications précédentes, **caractérisé en ce que** le dispositif de moulage par injection (1) comprend au moins un clapet anti-retour (12) qui est disposé entre le canal de préchauffage (9) et l'outil de réticulation (3).

10. Dispositif de moulage par injection (1) selon la revendication 9, **caractérisé en ce que** le dispositif de moulage par injection (1) comprend au moins un insert de refroidissement (13), l'insert de refroidissement (13) étant disposé en particulier dans l'outil de réticulation (5) et chaque insert de refroidissement (13) entourant au moins partiellement l'un des clapets anti-retour (12) et/ou étant découplé thermiquement de l'outil de réticulation (3) au moins dans certaines zones.
